(19) **Europäisches Patentamt / European Patent Office / Office européen des brevets**

(11) **EP 1 540 842 B1**

(12) **EUROPEAN PATENT SPECIFICATION**

(45) Date of publication and mention
of the grant of the patent:
**01.04.2009 Bulletin 2009/14**

(21) Application number: **03748018.3**

(22) Date of filing: **15.09.2003**

(51) Int Cl.:
***H04B 1/707*** (2006.01)

(86) International application number:
**PCT/EP2003/010186**

(87) International publication number:
**WO 2004/028015 (01.04.2004 Gazette 2004/14)**

(54) **METHODS, SYSTEMS, AND COMPUTER PROGRAM PRODUCTS FOR SELECTING DELAY POSITIONS FOR A RAKE RECEIVER BY ADJUSTING THE DELAY POSITIONS BASED ON COMPARISONS OF SIGNAL TO INTERFERENCE RATIOS AND/OR POWERS FOR MULTI-PATH SIGNALS OVER TIME**

VERFAHREN, SYSTEME UND COMPUTERPROGRAMMPRODUKTE ZUR AUSWAHL VON VERZÖGERUNGSPOSITIONEN FÜR EINEN RAKE-EMPFÄNGER DURCH EINSTELLUNG DER VERZÖGERUNGSPOSITIONEN AUF DER BASIS VON VERGLEICHEN DER SIGNAL/STÖRUNGS-VERHÄLTNISSE UND/ODER LEISTUNGEN FÜR MEHRWEGESIGNALE ÜBER DIE ZEIT HINWEG

PROCEDES, SYSTEMES ET LOGICIEL PERMETTANT DE CHOISIR DES POSITIONS RELATIVES A DES TEMPS DE PROPAGATION POUR UN RECEPTEUR EN RATEAU PAR REGLAGE DESDITES POSITIONS PAR COMPARAISON DE RAPPORTS SIGNAL A BRUIT ET/OU DE PUISSANCES POUR DES SIGNAUX A TRAJETS MULTIPLES AU FIL DU TEMPS

(84) Designated Contracting States:
**AT BE BG CH CY CZ DE DK EE ES FI FR GB GR HU IE IT LI LU MC NL PT RO SE SI SK TR**

(30) Priority: **20.09.2002 US 412321 P**
**27.06.2003 US 607961**

(43) Date of publication of application:
**15.06.2005 Bulletin 2005/24**

(73) Proprietor: **TELEFONAKTIEBOLAGET LM ERICSSON (publ)**
**164 83 Stockholm (SE)**

(72) Inventors:
• **ERICSSON, Anders**
**S-247 32 Södra Sandby (SE)**
• **WANG, Xiaohui**
**S-247 35 Södra Sandby (SE)**

(74) Representative: **Boesen, Johnny Peder et al**
**Zacco Denmark A/S**
**Hans Bekkevolds Allé 7**
**2900 Hellerup (DK)**

(56) References cited:
**EP-A- 1 225 707        US-A- 6 078 611**
**US-B1- 6 370 397**

**Description**

BACKGROUND OF THE INVENTION

The present invention relates to communication methods and electronic devices, and, more particularly, to communication methods and electronic devices that use a RAKE receiver architecture.

Wireless communications systems are commonly used to provide voice and data communications to subscribers. For example, analog cellular radiotelephone systems, such as those designated AMPS, ETACS, NMT-450, and NMT-900, have long been deployed successfully throughout the world. Digital cellular radiotelephone systems such as those conforming to the North American standard IS-54 and the European standard GSM have been in service since the early 1990's. More recently, a wide variety of wireless digital services broadly labeled as PCS (Personal Communications Services) have been introduced, including advanced digital cellular systems conforming to standards such as IS-136 and IS-95, lower-power systems such as DECT (Digital Enhanced Cordless Telephone) and data communications services such as CDPD (Cellular Digital Packet Data). These and other systems are described in The Mobile Communications Handbook, edited by Gibson and published by CRC Press (1996).

Several types of access techniques are conventionally used to provide wireless services to users of wireless systems. Traditional analog cellular systems generally use a system referred to as Frequency Division Multiple Access (FDMA) to create communications channels, wherein discrete frequency bands serve as channels over which cellular terminals communicate with cellular base stations. Typically, these bands are reused in geographically separated cells in order to increase system capacity.

Modern digital wireless systems typically use different multiple access techniques such as Time Division Multiple Access (TDMA) and/or Code Division Multiple Access (CDMA) to provide increased spectral efficiency. In TDMA systems, such as those conforming to the GSM or IS-136 standards, carriers are divided into sequential time slots that are assigned to multiple channels such that a plurality of channels may be multiplexed on a single carrier. CDMA systems, such as those conforming to the IS-95 standard, achieve increased channel capacity by using "spread spectrum" techniques wherein a channel is defined by modulating a data-modulated carrier signal by a unique spreading code, i.e., a code that spreads an original data-modulated carrier over a wide portion of the frequency spectrum in which the communications system operates. The spreading code typically includes a sequence of "chips" occurring at a chip rate that is higher than the bit rate of the data being transmitted.

A so-called RAKE receiver structure is commonly used to recover information corresponding to one of the user data streams. In a typical RAKE receiver, a received composite signal is correlated with a particular spreading sequence assigned to the receiver to produce a plurality of time-offset correlations, a respective one of which corresponds to an echo of a transmitted spread spectrum signal. The correlations are then combined in a weighted fashion, i.e., respective correlations are multiplied by respective weighting factors and then summed to produce a decision statistic. The correlations generally are performed in a plurality of correlating fingers in the RAKE receiver, wherein each finger is synchronized with a channel path. The outputs of all fingers are combined to allow an improvement in the overall signal-to-noise ratio of the received signal. The design and operation of RAKE receivers are well known to those having skill in the art and need not be described further herein.

To maintain the RAKE receiver fingers synchronized with their respective channel paths, a path searcher may be used to support the RAKE receiver. The path searcher can continuously search for new channel paths and estimate their delays. These delays are then assigned to the RAKE fingers. For a wideband CDMA (WCDMA) system, the detection of the multi-path delays is typically done as a two-stage process: In the first stage, a wide search is done to identify the location of the multi-path delays. The resolution of this first search (i.e., the separation between the delays) is typically one chip or less. Typically, the received power or signal to interference ratio (SIR) is used as a criterion for the quality of the delayed signal. In the second stage, a localized search is performed over selected regions of delays. The resolution of this second search is typically one-half chip to an eighth of a chip. A decision is then made as to which delays to use for despreading the data based on the information from the localized search.

Unfortunately, it may be difficult to select which localized region of delays to monitor, to update the monitored delays, and to select the final delays used for despreading the data. One approach is to select the best delays (delays with the highest powers and/or SIRs) from the localized search and then to follow those delays as they fade and move in time. The best ones of these delays are then used for despreading the data. Unfortunately, clearly defined peaks may not be available when examining the power or SIR profile versus the delay. Complicated rules may, therefore, be needed to extract peaks out of a profile that contains few, if any, sharp peaks. If the delay of a weak path is close to the delay of a strong path, then a RAKE receiver may identify two adjacent samples of the main lobe of a stronger path as two multi-paths if no constraints are imposed. As a consequence, the weaker path is lost.

In CDMA systems, only one RAKE finger is generally used for each path and the resolution for each finger may be smaller than a half chip. As a result, many despreaders with the separation of a fraction of a chip may be needed for each tuning finger. If all of the outputs of the tuning fingers are filtered and the delays are detected as the times corresponding to the highest SIRs and/or power values, then a large amount of memory and/or processing power may need to be allocated. US 6 370 397 discloses a procedure for selecting delay positions for a RAKE receiver. Channel Impulse Responses (CIR) are measured for successive time internvals. Multi-path delays are obtained from the successive CIR, and a difference in time is determined between multi-path delays from successive time internvals. Based on this difference, adjustment is made or not.

SUMMARY OF THE INVENTION

According to some embodiments of the present invention, delay positions for a RAKE receiver are selected by searching a plurality of multi-paths to select a set of multi-path delays associated with the highest signal to interference ratios (SIRs) and/or power values while maintaining a minimum distance between the multi-path delays during a first time interval. Respective SIRs and/or power values associated with the respective multi-path delays are determined during a second time interval. The respective SIRs and/or power values are filtered based on the SIRs and/or power values obtained while searching the plurality of multi-paths during the first time interval and determining respective SIRs and/or power values for the multi-path delays during the second time interval. For each of the respective multi-path delays, the respective filtered SIR and/or power value associated with the respective multi-path delay is compared with the SIRs and/or power values associated with delays immediately adjacent to that multi-path delay. For each of the respective multi-path delays, a respective multi-path delay position is adjusted based on the result of comparing the respective filtered SIR and/or power value associated with the respective multi-path delay with the filtered SIRs and/or power values associated with delays immediately adjacent to the respective multi-path delay. Respective multi-path delay positions are then assigned to fingers of a RAKE receiver.

Although described above primarily with respect to method aspects of the present invention, it will be understood that the present invention may be embodied as methods, systems, and/or computer program products.

BRIEF DESCRIPTION OF THE DRAWINGS

Other features of the present invention will be more readily understood from the following detailed description of specific embodiments thereof when read in conjunction with the accompanying drawings, in which:

FIG. 1 is a block diagram that illustrates a terrestrial radiotelephone communication system in accordance with some embodiments of the present invention;
FIG. 2 is a block diagram that illustrates a CDMA receiver in accordance with some embodiments of the present invention;
FIG. 3 is a block diagram that illustrates a baseband processing section of a CDMA receiver in accordance with some embodiments of the present invention; and
FIGS. 4 and 5 are flowcharts that illustrate operations for selecting delay positions for tuning the fingers of a RAKE receiver in accordance with some embodiments of the present invention.

DETAILED DESCRIPTION OF PREFERRED EMBODIMENTS

While the invention is susceptible to various modifications and alternative forms, specific embodiments thereof are shown by way of example in the drawings and will herein be described in detail. It should be understood, however, that there is no intent to limit the invention to the particular forms disclosed. Like reference numbers signify like elements throughout the description of the figures. It should be further understood that the terms "comprises" and/or "comprising" when used in this specification is taken to specify the presence of stated features, integers, steps, operations, elements, and/or components, but does not preclude the presence or addition of one or more other features, integers, steps, operations, elements, components, and/or groups thereof.

The present invention may be embodied as systems, e.g., electronic devices, methods, and/or computer program products. Accordingly, the present invention may be embodied in hardware and/or in software (including firmware, resident software, micro-code, *etc*.). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection having one or more wires, a portable computer diskette, a random access memory (RAM), a read-only memory (ROM), an erasable programmable read-only memory (EPROM or Flash memory), an optical fiber, and a compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

The present invention is described herein in the context of selecting delay positions for fingers in a RAKE receiver in a mobile terminal receiver. It will be understood, however, that the present invention may be embodied in other types of electronic devices that incorporate a RAKE receiver. Moreover, as used herein, the term "mobile terminal" may include a satellite or cellular radiotelephone with or without a multi-line display; a Personal Communications System (PCS) terminal that may combine a cellular radiotelephone with data processing, facsimile and data communications capabilities; a PDA that can include a radiotelephone, pager, Internet/intranet access, Web browser, organizer, calendar and/or a global positioning system (GPS) receiver; and a conventional laptop and/or palmtop receiver or other appliance that includes a radiotelephone transceiver. Mobile terminals may also be referred to as "pervasive computing" devices. The present invention is also described herein in the context of selecting delay positions for fingers of a RAKE receiver based on signal to interference (SIR) ratios. It will be understood, however, that, in accordance with some embodiments of the present invention, power values may be used in addition to or in place of the SIR ratios.

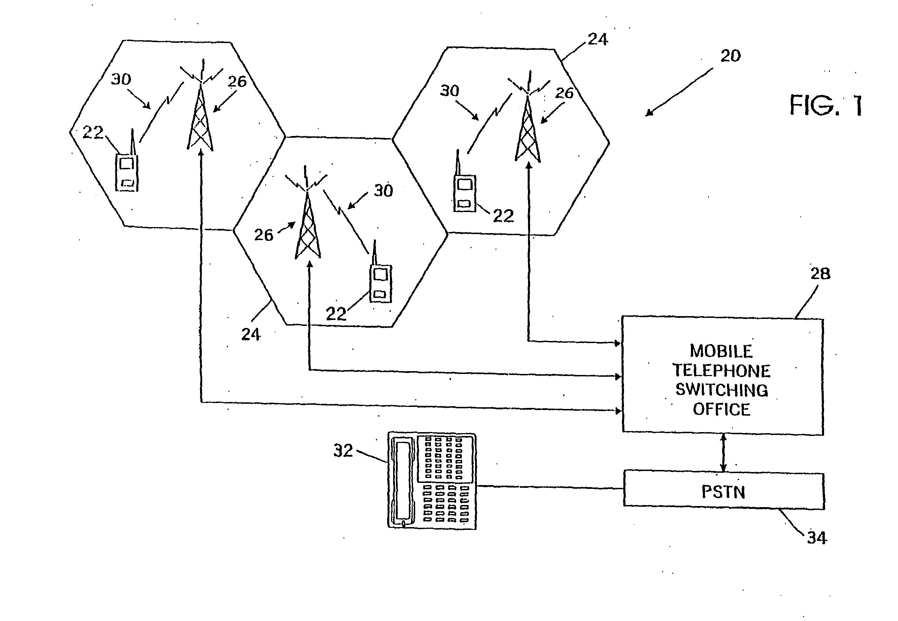

Referring now to FIG. 1, a terrestrial cellular radiotelephone communication system 20 is illustrated. The cellular radiotelephone communication system 20 may include one or more radiotelephones (terminals) 22, communicating with a plurality of cells 24 served by base stations 26 and a mobile telephone switching office (MTSO) 28. Although only three cells 24 are shown in FIG. 1, a typical cellular network may include hundreds of cells, may include more than one MTSO, and may serve thousands of radiotelephones.

The cells 24 generally serve as nodes in the communication system 20, from which links are established between radiotelephones 22 and the MTSO 28, by way of the base stations 26 serving the cells 24. Each cell 24 will have allocated to it one or more dedicated control channels and one or more traffic channels. A control channel is a dedicated channel used for transmitting cell identification and paging information. The traffic channels carry the voice and data information. Through the cellular network 20, a duplex radio communication link may be established between two mobile terminals 22 or between a mobile terminal 22 and a landline telephone user 32 through a Public Switched Telephone Network (PSTN) 34. The function of a base station 26 is to handle radio communication between a cell 24 and mobile terminals 22. In this capacity, a base station 26 functions as a relay station for data and voice signals.

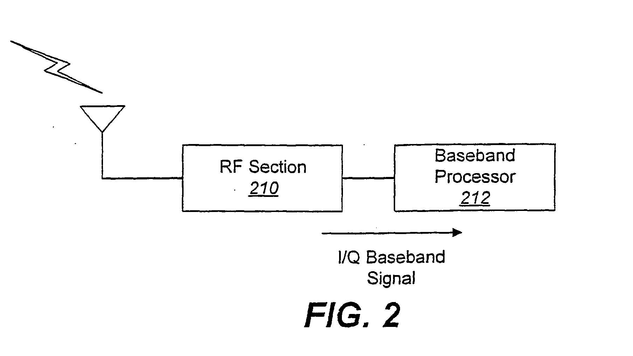

Referring now to FIG. 2, a block diagram of a CDMA mobile terminal receiver that can select multi-path delay positions for a RAKE receiver, in accordance with some embodiments of the present invention, is illustrated. As shown in FIG. 2, a received signal is filtered and down-converted to baseband in RF section 210. Baseband processing section 212 processes the in-phase/quadrature (I/Q) baseband signal. The design and operation of the RF section 210 and the baseband processing section 212, apart from the multi-path delay position selection for a RAKE receiver embodiments of the present invention, are generally well known to those having skill in the art and need not be described further herein.

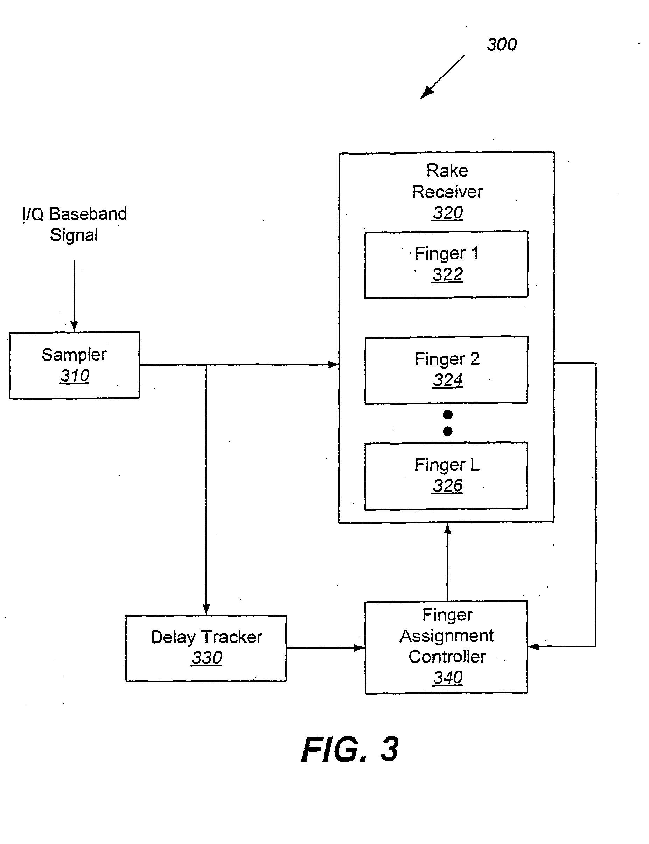

Referring now to FIG. 3, a baseband processing section 300 of a CDMA receiver may comprise a sampler 310 that is configured to sample the I/Q baseband signal. The sampled baseband signal is applied to the rake receiver 320 and the delay tracker 330. The rake receiver 320 is configured to combine multi-path signals together so as to exploit channel diversity. The RAKE receiver 320 comprises a number of processing units or RAKE fingers 322, 324, and 326. When demodulating a multi-path fading channel, each finger of the RAKE receiver is synchronized with one of the diverse propagation paths of the channel. A RAKE receiver comprising L fingers is able to detect L copies of the transmitted signal, which are corrected for time delays and added coherently. The resulting signal comprises a collection of several of the time-delayed copies of the transmitted signal. Generally, the RAKE receiver fingers are assigned to the strongest set of multi-path signals. Initially, a finger assignment controller 340 assigns a delay position or offset to each finger 322, 324, and 326. Thereafter, the delay tracker 330, in conjunction with the finger assignment controller 340, make adjustments to the delay positions or offsets assigned to the fingers 322, 324, and 326. Exemplary operations for selecting delay positions or offsets for tuning the fingers of the RAKE receiver 320 will now be described.

Although FIGS. 2 and 3 illustrate an exemplary hardware and/or software architecture that may be used to select delay positions for tuning the fingers of a RAKE receiver, it will be understood that the present invention is not limited to such a configuration. It will be further appreciated that the functionality of any or all of the processing modules of FIGS. 2 and 3 may also be implemented using discrete hardware components, one or more application specific integrated circuits (ASICs), or a programmed digital signal processor or microcontroller.

The present invention is described hereinafter with reference to flowchart and/or block diagram illustrations of methods, electronic devices, and computer program products in accordance with some embodiments of the invention. These flowchart and/or block diagrams further illustrate exemplary operations of the CMDA receiver architecture of FIGS. 2 and 3. It will be understood that each block of the flowchart and/or block diagram illustrations, and combinations of blocks in the flowchart and/or block diagram illustrations, may be implemented by computer program instructions and/or hardware operations. These computer program instructions may be provided to a processor of a general purpose computer, a special purpose computer, or other programmable data processing apparatus to produce a machine, such that the instructions, which execute via the processor of the computer or other programmable data processing apparatus, create means for implementing the functions specified in the flowchart and/or block diagram block or blocks.

These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart and/or block diagram block or blocks.

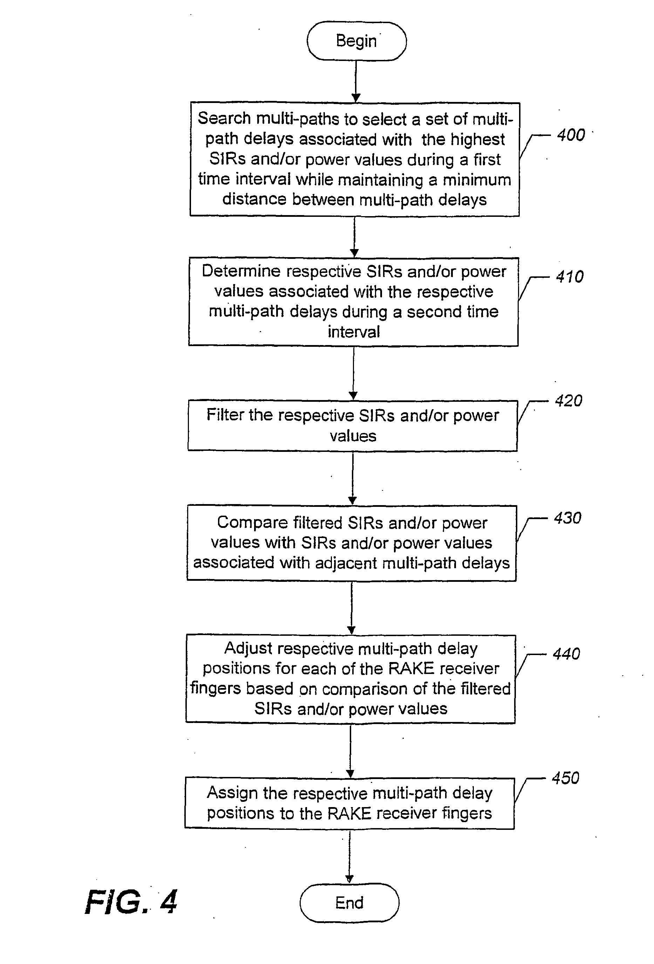

Referring now to FIG. 4, exemplary operations for selecting delay positions for tuning the fingers of a RAKE receiver, in accordance with some embodiments of the present invention, will now be described. Operations begin at block 400 where, for example, the delay tracker 330 of FIG. 3 searches multi-paths to select a set of multi-path delays associated with the highest SIRs and/or power values while maintaining a minimum distance between adjacent multi-path delay signals during a first time interval. At block 410, the delay tracker 330 determines respective SIRs and/or power values associated with the respective multi-path delays during a second time interval. The delay tracker 330 and/or the finger assignment controller 340 of FIG. 3 may then filter the respective SIRs and/or power values at block 420.

In accordance with particular embodiments of the present invention, a multi-path SIR and/or power value may be filtered using the EQ. 1 below:

$$P_{n,0}[k+1] = \alpha * P_{n,0}[k] + (1-\alpha) * \tilde{P}_{n,0}[k+1] \qquad \text{EQ. 1}$$

where $P_{n,0}[k]$ is the filtered SIR and/or power value for a particular multi-path delay signal n at time k determined at block 410, $P_{n,0}[k+1]$ is the filtered SIR and/or power value to be associated with one of the rake receiver 320 fingers 322, 324, and 326, $\tilde{P}_{n,0}[k+1]$ is the SIR and/or power value for the multi-path delay signal n that is output from the corresponding tuning finger, i.e., the SIR and/or power value determined for the multi-path delay signal n during a previous time interval at block 400. The scaling factor $\alpha$ is less than 1, in accordance with some embodiments of the present invention.

Returning to FIG. 4, each filtered SIR and/or power value is compared with the SIRs and/or power values associated with adjacent multi-path delay signals at block 430. In particular embodiments, the comparison may be performed by determining if $P_{n,0}[k+1] > \beta * P_{n,\pm 1}[k+1]$, where $P_{n,\pm 1}[k+1]$ corresponds to the SIRs and/or power values associated with adjacent multi-path delay signals and $\beta$ is less than or equal to one to maintain the stability of the multi-path delay positions for the RAKE receiver 320 fingers 322, 324, and 326.

At block 440, the finger assignment controller adjusts respective multi-path delay positions for each of the RAKE receiver 320 fingers 322, 324, and 326 based on the comparison performed above at block 430. In particular embodiments of the present invention, a multi-path delay position for a particular finger 322, 324, and 326, which is associated with a particular multi-path delay signal, is moved to the left or the right to a position corresponding to an adjacent multi-path delay signal if the scaled SIR and/or power value associated with that adjacent multi-path delay signal is greater than the SIR and/or power value associated with the particular multi-path delay signal. If the multi-path delay position is moved, then the SIR and/or power value associated with the multi-path delay signal at the former position is reduced by applying a scaling factor to reduce the likelihood that the multi-path delay position toggles back and forth between two multi-path delay signals having SIR and/or power values that are relatively close.

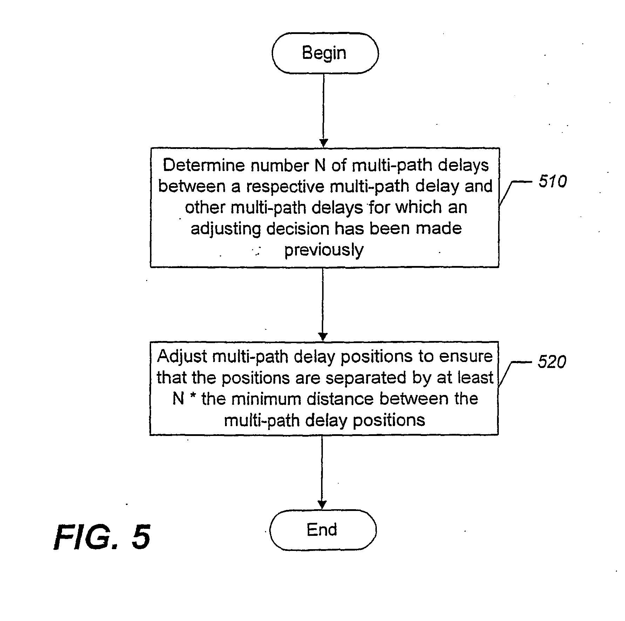

Referring now to FIG. 5, to ensure that the multi-path delay positions for each of the RAKE receiver 320 fingers are separated by a minimum distance, the finger assignment controller 340 may determine a number N of multi-path delay signals between a respective or particular multi-path delay signal currently being processed and other multi-path delay signals for which an adjusting decision has already been made at block 510. At block 520, the finger assignment controller adjusts the multi-path delay positions to ensure that the positions are separated by at least N * a minimum distance between the multi-path delay signals. Returning to FIG. 4, after each of the multi-path delay positions have been adjusted, the finger assignment controller assigns the respective multi-path delay positions to the RAKE receiver fingers 322, 324, and 326 at block 450.

The flowcharts of FIGS. 4 and 5 illustrate the architecture, functionality, and operations of some embodiments of systems for selecting delay positions for a RAKE receiver in a mobile terminal receiver. In this regard, each block represents a module, segment, or portion of code, which comprises one or more executable instructions for implementing the specified logical function(s). It should also be noted that in other implementations, the function(s) noted in the blocks may occur out of the order noted in FIGS. 4 and 5. For example, two blocks shown in succession may, in fact, be executed substantially concurrently or the blocks may sometimes be executed in the reverse order, depending on the functionality involved.

Advantageously, embodiments of the present invention use a minimum distance constraint to ensure that different RAKE receiver fingers 322, 324, and 326 track different multi-path delay signals. The multi-path delay signals are ordered in terms of their filtered SIRs and/or power values, such that stronger paths are given priority and are assigned to the various RAKE fingers. This results in new SIR and/or power values for multi-path delay signals adjacent to the positions assigned to the RAKE fingers. These new SIR and/or power values may then be used to determine whether to shift the multi-path delay position(s) for the RAKE finger(s). Because the variation of the delays of the multi-path delay signals is generally much slower than the tuning period, only the filtered values of the signals associated with the various RAKE fingers and their adjacent neighbors are relevant, which may allow the present invention to use less processing power and memory. In some embodiments of the present invention, an adaptive algorithm may be applied to choose the number of multi-path signals to be tracked and which of the tracked signals should be selected for determining the delay positions of the RAKE fingers.

Many variations and modifications can be made to the preferred embodiments without substantially departing from the principles of the present invention.

**Claims**

1. A method of selecting delay positions for a RAKE receiver (320), comprising:

    searching (400) a plurality of multi-paths to select a set of multi-path delays associated with the highest signal to interference ratios SIRs and/or power values while maintaining a minimum distance between the multi-path delays during a first time interval;
    determining (410) respective SIRs and/or power values associated with the respective multi-path delays during a second time interval; and
    filtering (420) the respective SIRs and/or power values based on the SIRs and/or power values obtained during searching the plurality of multi-paths and determining respective SIRs and/or power values;

    **characterized in that** the method further comprises:

    for each of the respective multi-path delays, comparing (430) the respective filtered SIR and/or power value associated with the respective multi-path delay with the SIRs and/or power values associated with delays immediately adjacent to the respective multi-path delay;
    for each of the respective multi-path delays, adjusting (440) a respective multi-path delay position based on comparing the respective filtered SIR and/or power value associated with the respective multi-path delay with the filtered SIRs and/or power values associated with delays immediately adjacent to the respective multi-path delay; and
    assigning (450) the respective multi-path delay positions to fingers of a RAKE receiver.

2. The method of Claim 1, wherein filtering the respective SIRs and/or power values comprises:

    for each of the respective multi-path delays:

        multiplying the SIR and/or power value obtained during the first time interval by a scaling factor X to obtain a first product;
        multiplying the SIR and/or power value obtained during the second time interval by (1-X) to obtain a second product; and
        adding the first and second products to obtain a filtered SIR and/or power value.

3. The method of Claim 1, wherein comparing the respective filtered SIR and/or power value associated with the respective multi-path delay with the filtered SIRs and/or power values associated with delays immediately adjacent to the respective multi-path delay comprises:

    multiplying the filtered SIRs and/or power values associated with delays immediately adjacent to the respective multi-path delay by a scaling factor that is between 0 and 1; and
    determining if the respective filtered SIR and/or power value is greater than the scaled filtered SIRs and/or power values associated with the delays immediately adjacent to the respective multi-path delay.

4. The method of Claim 3, wherein adjusting the respective multi-path delay position comprises:

   adjusting the respective multi-path delay position if the respective filtered SIR. and/or power value for the respective multi-path delay is not greater than at least one of the scaled filtered SIRs and/or power values associated with the delays immediately adjacent to the respective multi path delay.

5. The method of Claim 4, wherein adjusting the respective multi-path delay position comprises:

   determining (510) a number N of multi-path delays between the respective multi-path delay and one of the multi-path delays for which an adjusting decision has been previously made; and
   adjusting (520) the respective multi-path delay position of the respective multi-path delay to ensure that the respective multi-path delay and the one of the multi-path delays for which an adjusting decision has previously been made are separated by at least a distance of N * the minimum distance between the multi-path delays.

6. The method of Claim 4, further comprising:

   scaling the filtered SIR and/or power value for the respective multi-path delay to reduce the filtered SIR and/or power value at a previous multi-path delay position after adjusting the respective multi-path delay position if the respective filtered SIR and/or power value for the respective multi-path delay is not greater than the scaled filtered SIRs and/or power values associated with the delays immediately adjacent to the respective multi-path delay.

7. A system for selecting delay positions for a RAKE receiver (320), comprising:

   means for searching a plurality of multi-paths to select a set of multi-path delays associated with the highest signal to interference ratios SIRs and/or power values while maintaining a minimum distance between the multi-path delays during a first time interval;
   means for determining respective SIRs and/or power values associated with the respective multi-path delays during a second time interval; and
   means for filtering the respective SIRs and/or power values based on the SIRs and/or power values obtained during searching the plurality of multi-paths and determining respective SIRs and/or power values;
   **characterized in that** the system further comprises:
   for each of the respective multi-path delays, means for comparing the respective filtered SIR and/or power value associated with the respective multi-path delay with the SIRs and/or power values associated with delays immediately adjacent to the respective multi-path delay;
   for each of the respective multi-path delays, means for adjusting a respective multi-path delay position based on comparing the respective filtered SIR and/or power value associated with the respective multi-path delay with the filtered SIRs and/or power values associated with delays immediately adjacent to the respective multi-path delay; and
   means for assigning the respective multi-path delay positions to fingers of a RAKE receiver.

8. The system of Claim 7, wherein the means for filtering the respective SIRs and/or power values comprises:

   for each of the respective multi-path delays:

       means for multiplying the SIR and/or power value obtained during the first time interval by a scaling factor X to obtain a first product;
       means for multiplying the SIR and/or power value obtained during the second time interval by (1-X) to obtain a second product; and
       means for adding the first and second products to obtain a filtered SIR and/or power value.

9. The system of Claim 7, wherein the means for comparing the respective filtered SIR and/or power value associated with the respective multi-path delay with the filtered SIRs and/or power values associated with delays immediately adjacent to the respective multi-path delay comprises:

   means for multiplying the filtered SIRs and/or power values associated with delays immediately adjacent to the respective multi-path delay by a scaling factor that is between 0 and 1; and
means for determining if the respective filtered SIR and/or power value is greater than the scaled filtered SIRs and/or power values associated with the delays immediately adjacent to the respective multi-path delay.

10. The system of Claim 9, wherein the means for adjusting the respective multi-path delay position comprises:

means for adjusting the respective multi-path delay position if the respective filtered SIR and/or power value for the respective multi-path delay is not greater than at least one of the scaled filtered SIRs and/or power values associated with the delays immediately adjacent to the respective multi-path delay.

11. The system of Claim 10, wherein the means for adjusting the respective multi-path delay position comprises:

means for determining a number N of multi-path delays between the respective multi-path delay and one of the multi-path delays for which an adjusting decision has been previously made; and
means for adjusting the respective multi-path delay position of the respective multi-path delay to ensure that the respective multi-path delay and the one of the multi-path delays for which an adjusting decision has previously been made are separated by at least a distance of N * the minimum distance between the multi-path delays.

12. The system of Claim 10, further comprising:

means for scaling the filtered SIR and/or power value for the respective multipath delay to reduce the filtered SIR and/or power value at a previous multi-path delay position after adjusting the respective multi-path delay position if the respective filtered SIR and/or power value for the respective multi-path delay is not greater than the scaled filtered SIRs and/or power values associated with the delays immediately adjacent to the respective multi-path delay.

13. A computer program product for selecting delay positions for a RAKE receiver (320), comprising:

a computer readable storage medium having computer readable program code embodied therein, the computer readable program code comprising:
computer readable program code configured to search (400) a plurality of multi-paths to select a set of multi-path delays associated with the highest signal to interference ratios SIRs and/or power values while maintaining a minimum distance between the multi-path delays during a first time interval;
computer readable program code configured to determine (410) respective SIRs and/or power values associated with the respective multi-path delays during a second time interval; and
computer readable program code configured to filter (420) the respective SIRs and/or power values based on the SIRs and/or power values obtained during searching the plurality of multi-paths and determining respective SIRs and/or power values;

**characterized in that** the computer program product further comprises
for each of the respective multi-path delays, computer readable program code configured to compare (430) the respective filtered SIR and/or power value associated with the respective multi-path delay with the SIRs and/or power values associated with delays immediately adjacent to the respective multi-path delay;
for each of the respective multi-path delays, computer readable program code configured to adjust (440) a respective multi-path delay position based on comparing the respective filtered SIR and/or power value associated with the respective multi-path delay with the filtered SIRs and/or power values associated with delays immediately adjacent to the respective multi-path delay; and
computer readable program code configured to assign (450) the respective multi-path delay positions to fingers of a RAKE receiver.

14. The computer program product of Claim 13, wherein the computer readable program code configured to filter the respective SIRs and/or power values comprises:

for each of the respective multi-path delays:

computer readable program code configured to multiply the SIR and/or power value obtained during the first time interval by a scaling factor X to obtain a first product;
computer readable program code configured to multiply the SIR and/or power value obtained during the second time interval by (1-X) to obtain a second product; and
computer readable program code configured to add the first and second products to obtain a filtered SIR and/or power value.

**15.** The computer program product of Claim 13, wherein the computer readable program code configured to compare the respective filtered SIR and/or power value associated with the respective multi-path delay with the filtered SIRs and/or power values associated with delays immediately adjacent to the respective multi-path delay comprises:

computer readable program code configured to multiply the filtered SIRs and/or power values associated with delays immediately adjacent to the respective multi-path delay by a scaling factor that is between 0 and 1; and
computer readable program code configured to determine if the respective filtered SIR and/or power value is greater than the scaled filtered SIRs and/or power values associated with the delays immediately adjacent to the respective multi-path delay.

**16.** The computer program product of Claim 15, wherein the computer readable program code configured to adjust the respective multi-path delay position comprises:

computer readable program code configured to adjust the respective multi-path delay position if the respective filtered SIR and/or power value for the respective multi-path delay is not greater than at least one of the scaled filtered SIRs and/or power values associated with the delays immediately adjacent to the respective multi-path delay.

**17.** The computer program product of Claim 16, wherein the computer readable program code configured to adjust the respective multi-path delay position comprises:

computer readable program code configured to determine (510) a number N of multi-path delays between the respective multi-path delay and one of the multi-path delays for which an adjusting decision has been previously made; and
computer readable program code configured to adjust (520) the respective multi-path delay position of the respective multi-path delay to ensure that the respective multi-path delay and the one of the multi-path delays for which an adjusting decision has previously been made are separated by at least a distance of N * the minimum distance between the multi-path delays.

**18.** The computer program product of Claim 16, further comprising:

computer readable program code configured to scale the filtered SIR and/or power value for the respective multi-path delay to reduce the filtered SIR and/or power value at a previous multi-path delay position after adjusting the respective multi-path delay position if the respective filtered SIR and/or power value for the respective multi-path delay is not greater than the scaled filtered SIRs and/or power values associated with the delays immediately adjacent to the respective multi-path delay.

**Patentansprüche**

**1.** Verfahren zum Auswählen von Verzögerungspositionen für einen RAKE-Empfänger (320), mit:

Suchen (400) einer Vielzahl von Mehrfachwegen (Multi-Paths), um einen Satz von Mehrfachwegverzögerungen auszuwählen, die mit dem höchsten Signal-zu-Interferenzverhältnissen SIRs und/oder Leistungswerten verknüpft sind, während eine Minimalentfernung zwischen den Mehrfachwegverzögerungen während einem ersten Zeitintervall aufrecht erhalten wird;
Bestimmen (410) jeweiliger SIRs und/oder Leistungswerte, die mit den jeweiligen Mehrfachwegverzögerungen verknüpft sind, während einem zweiten Zeitintervall; und
Filtern (420) der jeweiligen SIRs und/oder Leistungswerte basierend auf den SIRs und/oder Leistungswerten, die während einem Suchen der Vielzahl von Mehrfachwegen und Bestimmen jeweiliger SIRs und/oder Leistungswerte erhalten werden;

**dadurch gekennzeichnet, dass** das Verfahren weiter umfasst:

Vergleichen (430) für jede der jeweiligen Mehrfachwegverzögerungen des jeweiligen gefilterten SIR und/oder Leistungswertes, der mit der jeweiligen Mehrfachwegverzögerung verknüpft ist, mit den SIRs und/oder Leistungswerten, die mit den Verzögerungen verknüpft sind, die direkt benachbart zu der jeweiligen Mehrfachwegverzögerung sind;

Einstellen (440) für jede der jeweiligen Mehrfachwegverzögerungen einer jeweiligen Mehrfachwegverzögerungsposition basierend auf einem Vergleichen des jeweiligen gefilterten SIR und/oder Leistungswertes, der mit der jeweiligen Mehrfachwegverzögerung verknüpft ist, mit den gefilterten SIRs und/oder Leistungswerten, die mit Verzögerungen verknüpft sind, die direkt benachbart zu der jeweiligen Mehrfachwegverzögerung sind; und

Zuordnen (450) der jeweiligen Mehrfachwegverzögerungspositionen zu Fingern eines RAKE-Empfängers.

2. Verfahren nach Anspruch 1, wobei ein Filtern der jeweiligen SIRs und/oder Leistungswerte umfasst:

für jede der jeweiligen Mehrfachwegverzögerungen:

Multiplizieren des SIR und/oder Leistungswertes, der während dem ersten Zeitintervall erhalten wird, mit einem Skalierungsfaktor X, um ein erstes Produkt zu erhalten;

Multiplizieren des SIR und/oder Leistungswertes, der während dem zweiten Zeitintervall erhalten wird, mit (1-X), um ein zweites Produkt zu erhalten; und

Addieren des ersten und zweiten Produkts, um ein gefiltertes SIR und/oder einen Leistungswert zu erhalten.

3. Verfahren nach Anspruch 1, wobei ein Vergleichen des jeweiligen gefilterten SIR und/oder Leistungswertes, der mit der jeweiligen Mehrfachwegverzögerung verknüpft ist, mit den gefilterten SIRs und/oder Leistungswerten, die mit Verzögerungen verknüpft sind, die direkt benachbart zu der jeweiligen Mehrfachwegverzögerung sind, umfasst:

Multiplizieren der gefilterten SIRs und/oder Leistungswerten, die mit Verzögerungen verknüpft sind, die direkt benachbart zu der jeweiligen Mehrfachwegverzögerung sind, mit einem Skalierungsfaktor, der zwischen 0 und 1 liegt; und

Bestimmen, ob das jeweilige gefilterte SIR und/oder der Leistungswert größer als die skalierten, gefilterten SIRs und/oder Leistungswerte ist, die mit den Verzögerungen verknüpft sind, die direkt benachbart zu der jeweiligen Mehrfachwegverzögerung sind.

4. Verfahren nach Anspruch 3, wobei ein Einstellen der jeweiligen Mehrfachwegverzögerungsposition umfasst:

Einstellen der jeweiligen Mehrfachwegverzögerungsposition, falls das jeweilige gefilterte SIR und/oder der Leistungswert für die jeweilige Mehrfachwegverzögerung nicht größer als zumindest eines der skalierten, gefilterten SIRs und/oder Leistungswerte ist, die mit den Verzögerungen verknüpft sind, die direkt benachbart zu der jeweiligen Mehrfachwegverzögerung sind.

5. Verfahren nach Anspruch 4, wobei ein Einstellen der jeweiligen Mehrfachwegverzögerung umfasst:

Bestimmen (510) einer Anzahl N von Mehrfachwegverzögerungen zwischen der jeweiligen Mehrfachwegverzögerung und einer der Mehrfachwegverzögerungen, für die eine Einstellungsentscheidung zuvor getroffen worden ist; und

Einstellen (520) der jeweiligen Mehrfachwegverzögerungsposition der jeweiligen Mehrfachwegverzögerung, um sicherzustellen, dass die jeweilige Mehrfachwegverzögerung und die eine der Mehrfachwegverzögerungen, für die zuvor eine Einstellungsentscheidung getroffen worden ist, durch zumindest eine Entfernung von N * die Minimalentfernung zwischen den Mehrfachwegverzögerungen getrennt ist.

6. Verfahren nach Anspruch 4, weiter mit:

Skalieren des gefilterten SIR und/oder Leistungswertes für die jeweilige Mehrfachwegverzögerung, um das gefilterte SIR und/oder den Leistungswert bei einer vorherigen Mehrfachwegverzögerungsposition nach einem Einstellen der jeweiligen Mehrfachwegverzögerungsposition zu verringern, falls das jeweilige, gefilterte SIR und/oder der Leistungswert für die jeweilige Mehrfachwegverzögerung nicht größer als die skalierten, gefilterten SIRs und/oder Leistungswerte ist, die mit den Verzögerungen verknüpft sind, die direkt benachbart zu der jeweiligen Mehrfachwegverzögerung sind.

**7.** System zum Auswählen von Verzögerungspositionen für einen RAKE-Empfänger (320), mit:

einer Vorrichtung zum Suchen einer Vielzahl von Mehrfachwegen (Multi-Paths), um einen Satz von Mehrfachwegverzögerungen auszuwählen, die mit dem höchsten Signal-zu-Interferenzverhältnissen SIRs und/oder Leistungswerten verknüpft sind, während eine Minimalentfernung zwischen den Mehrfachwegverzögerungen während einem ersten Zeitintervall aufrecht erhalten wird;
einer Vorrichtung zum Bestimmen jeweiliger SIRs und/oder Leistungswerte, die mit den jeweiligen Mehrfachwegverzögerungen verknüpft sind, während einem zweiten Zeitintervall; und
einer Vorrichtung zum Filtern der jeweiligen SIRs und/oder Leistungswerte basierend auf den SIRs und/oder Leistungswerten, die während einem Suchen der Vielzahl von Mehrfachwegen und Bestimmen jeweiliger SIRs und/oder Leistungswerte erhalten werden;

**dadurch gekennzeichnet, dass** das System weiter umfasst:

für jede der jeweiligen Mehrfachwegverzögerungen, eine Vorrichtung zum Vergleichen des jeweiligen gefilterten SIR und/oder Leistungswertes, der mit der jeweiligen Mehrfachwegverzögerung verknüpft ist, mit den SIRs und/oder Leistungswerten, die mit den Verzögerungen verknüpft sind, die direkt benachbart zu der jeweiligen Mehrfachwegverzögerung sind;
für jede der jeweiligen Mehrfachwegverzögerungen eine Vorrichtung zum Einstellen einer jeweiligen Mehrfachwegverzögerungsposition basierend auf einem Vergleichen des jeweiligen gefilterten SIR und/oder Leistungswertes, der mit der jeweiligen Mehrfachwegverzögerung verknüpft ist, mit den gefilterten SIRs und/oder Leistungswerten, die mit Verzögerungen verknüpft sind, die direkt benachbart zu der jeweiligen Mehrfachwegverzögerung sind; und
eine Vorrichtung zum Zuordnen der jeweiligen Mehrfachwegverzögerungspositionen zu Fingern eines RAKE-Empfängers.

**8.** System nach Anspruch 7, wobei die Vorrichtung zum Filtern der jeweiligen SIRs und/oder Leistungswerte umfasst:

für jede der jeweiligen Mehrfachwegverzögerungen:

eine Vorrichtung zum Multiplizieren des SIR und/oder Leistungswertes, der während dem ersten Zeitintervall erhalten wird, mit einem Skalierungsfaktor X, um ein erstes Produkt zu erhalten;
eine Vorrichtung zum Multiplizieren des SIR und/oder Leistungswertes, der während dem zweiten Zeitintervall erhalten wird, mit (1-X), um ein zweites Produkt zu erhalten; und
eine Vorrichtung zum Addieren des ersten und zweiten Produkts, um ein gefiltertes SIR und/oder einen Leistungswert zu erhalten.

**9.** System nach Anspruch 7, wobei die Vorrichtung zum Vergleichen des jeweiligen gefilterten SIRs und/oder Leistungswertes, der mit der jeweiligen Mehrfachwegverzögerung verknüpft ist, mit den gefilterten SIRs und/oder Leistungswerten, die mit Verzögerungen verknüpft sind, die direkt benachbart zu der jeweiligen Mehrfachwegverzögerung sind, umfasst:

eine Vorrichtung zum Multiplizieren der gefilterten SIRs und/oder Leistungswerten, die mit Verzögerungen verknüpft sind, die direkt benachbart zu der jeweiligen Mehrfachwegverzögerung sind, mit einem Skalierungsfaktor, der zwischen 0 und 1 liegt; und
eine Vorrichtung zum Bestimmen, ob das jeweilige gefilterte SIR und/oder der Leistungswert größer als die skalierten, gefilterten SIRs und/oder Leistungswerte ist, die mit den Verzögerungen verknüpft sind, die direkt benachbart zu der jeweiligen Mehrfachwegverzögerung sind.

**10.** System nach Anspruch 9, wobei die Vorrichtung zum Einstellen der jeweiligen Mehrfachwegverzögerungsposition umfasst:

eine Vorrichtung zum Einstellen der jeweiligen Mehrfachwegverzögerungsposition, falls das jeweilige gefilterte SIR und/oder Leistungswert für die jeweilige Mehrfachwegverzögerung nicht größer als zumindest eines der skalierten, gefilterten SIRs und/oder Leistungswerte ist, die mit den Verzögerungen verknüpft sind, die direkt benachbart zu der jeweiligen Mehrfachwegverzögerung sind.

**11.** System nach Anspruch 10, wobei die Vorrichtung zum Einstellen der jeweiligen Mehrfachwegverzögerungsposition umfasst:

eine Vorrichtung zum Bestimmen einer Anzahl N von Mehrfachwegverzögerungen zwischen der jeweiligen Mehrfachwegverzögerung und einer der Mehrfachwegverzögerungen, für die eine Einstellungsentscheidung zuvor getroffen worden ist; und

eine Vorrichtung zum Einstellen der jeweiligen Mehrfachwegverzögerungsposition der jeweiligen Mehrfachwegverzögerung, um sicherzustellen, dass die jeweilige Mehrfachwegverzögerung und die eine der Mehrfachwegverzögerungen, für die zuvor eine Einstellungsentscheidung getroffen worden ist, durch zumindest eine Entfernung von N * die Minimalentfernung zwischen den Mehrfachwegverzögerungen getrennt ist.

**12.** System nach Anspruch 10, weiter mit:

einer Vorrichtung zum Skalieren des gefilterten SIRs und/oder Leistungswertes für die jeweilige Mehrfachwegverzögerung, um das gefilterte SIR und/oder den Leistungswert bei einer vorherigen Mehrfachwegverzögerungsposition nach einem Einstellen der jeweiligen Mehrfachwegverzögerungsposition zu verringern, falls das jeweilige, gefilterte SIR und/oder der Leistungswert für die jeweilige Mehrfachwegverzögerung nicht größer als die skalierten, gefilterten SIRs und/oder Leistungswerte ist, die mit den Verzögerungen verknüpft sind, die direkt benachbart zu der jeweiligen Mehrfachwegverzögerung sind.

**13.** Computerprogammprodukt zum Auswählen von Verzögerungspositionen für einen RAKE-Empfänger (320), mit:

einem Computer-lesbaren Speichermedium mit einem darin verkörperten Computer-lesbaren Programmcode, wobei der Computer-lesbare Programmcode umfasst:

einen Computer-lesbaren Programmcode, der konfiguriert ist, eine Vielzahl von Mehrfachwegen zu suchen (400), um einen Satz von Mehrfachwegverzögerungen auszuwählen, die mit dem höchsten Signal-zu-Interferenzverhältnissen SIRs und/oder Leistungswerten verknüpft sind, während eine Minimalentfernung zwischen den Mehrfachwegverzögerungen während einem ersten Zeitintervall aufrecht erhalten wird;

einen Computer-lesbaren Programmcode, der konfiguriert ist, jeweilige SIRs und/oder Leistungswerte zu bestimmen (410), die mit den jeweiligen Mehrfachwegverzögerungen verknüpft sind, während einem zweiten Zeitintervall; und

einen Computer-lesbaren Programmcode, der konfiguriert ist, die jeweiligen SIRs und/oder Leistungswerte basierend auf den SIRs und/oder Leistungswerten zu filtern (420), die während einem Suchen der Vielzahl von Mehrfachwegen und Bestimmen jeweiliger SIRs und/oder Leistungswerte erhalten werden;

**dadurch gekennzeichnet, dass** das Computerprogrammprodukt weiter umfasst:

für jede der jeweiligen Mehrfachwegverzögerungen, einen Computer-lesbaren Programmcode, der konfiguriert ist, den jeweiligen gefilterten SIR und/oder Leistungswert, der mit der jeweiligen Mehrfachwegverzögerung verknüpft ist, mit den SIRs und/oder Leistungswerten zu vergleichen (430), die mit den Verzögerungen verknüpft sind, die direkt benachbart zu der jeweiligen Mehrfachwegverzögerung sind;

für jede der jeweiligen Mehrfachwegverzögerungen, einen Computer-lesbaren Programmcode, der konfiguriert ist, eine jeweiligen Mehrfachwegverzögerungsposition basierend auf einem Vergleichen des jeweiligen gefilterten SIR und/oder Leistungswertes, der mit der jeweiligen Mehrfachwegverzögerung verknüpft ist, mit den gefilterten SIRs und/oder Leistungswerten einzustellen (440), die mit Verzögerungen verknüpft sind, die direkt benachbart zu der jeweiligen Mehrfachwegverzögerung sind; und

einen Computer-lesbaren Programmcode, der konfiguriert ist, die jeweiligen Mehrfachwegverzögerungspositionen zu Fingern eines RAKE-Empfängers zuzuordnen (450).

**14.** Computerprogrammprodukt nach Anspruch 13, wobei der Computer-lesbare Programmcode, der konfiguriert ist, die jeweilige SIRs und/oder Leistungswerte zu filtern, umfasst:

für jede der jeweiligen Mehrfachwegverzögerungen:

einen Computer-lesbaren Programmcode, der konfiguriert ist, das SIR und/oder Leistungswert, der während dem ersten Zeitintervall erhalten wird, mit einem Skalierungsfaktor X zu multiplizieren, um ein erstes Produkt zu erhalten;

einen Computer-lesbaren Programmcode, der konfiguriert ist, das SIR und/oder den Leistungswert, der während dem zweiten Zeitintervall erhalten wird, mit (1-X) zu multiplizieren, um ein zweites Produkt zu erhalten; und

einen Computer-lesbaren Programmcode, der konfiguriert ist, das erste und zweite Produkt zu addieren, um ein gefiltertes SIR und/oder einen Leistungswert zu erhalten.

15. Computerprogrammprodukt nach Anspruch 13, wobei der Computer-lesbare Programmcode, der konfiguriert ist, den jeweiligen gefilterten SIR und/oder Leistungswert, der mit der jeweiligen Mehrfachwegverzögerung verknüpft ist, mit den gefilterten SIRs und/oder Leistungswerten zu vergleichen, die mit Verzögerungen verknüpft sind, die direkt benachbart zu der jeweiligen Mehrfachwegverzögerung sind, umfasst:

einen Computer-lesbaren Programmcode, der konfiguriert ist, die gefilterten SIRs und/oder Leistungswerte, die mit Verzögerungen verknüpft sind, die direkt benachbart zu der jeweiligen Mehrfachwegverzögerung sind, mit einem Skalierungsfaktor zu multiplizieren, der zwischen 0 und 1 liegt; und
einen Computer-lesbaren Programmcode, der konfiguriert ist, zu bestimmen, ob das jeweilige gefilterte SIR und/oder der Leistungswert größer als die skalierten, gefilterten SIRs und/oder Leistungswerte sind, die mit den Verzögerungen verknüpft sind, die direkt benachbart zu der jeweiligen Mehrfachwegverzögerung sind.

16. Computerprogrammprodukt nach Anspruch 15, wobei der Computer-lesbare Programmcode konfiguriert ist, die jeweilige Mehrfachwegverzögerungsposition einzustellen, umfasst:

einen Computer-lesbaren Programmcode, der konfiguriert ist, die jeweiligen Mehrfachwegverzögerungsposition einzustellen, falls das jeweilige gefilterte SIR und/oder der Leistungswert für die jeweilige Mehrfachwegverzögerung nicht größer als zumindest eines der skalierten, gefilterten SIRs und/oder Leistungswerte ist, die mit den Verzögerungen verknüpft sind, die direkt benachbart zu der jeweiligen Mehrfachwegverzögerung sind.

17. Computerprogrammprodukt nach Anspruch 16, wobei der Computer-lesbare Programmcode, der konfiguriert ist, die jeweilige Mehrfachwegverzögerungsposition einzustellen, umfasst:

einen Computer-lesbaren Programmcode, der konfiguriert ist, eine Anzahl N von Mehrfachwegverzögerungen zwischen der jeweiligen Mehrfachwegverzögerung und einer der Mehrfachwegverzögerungen zu bestimmen (510), für die eine Einstellungsentscheidung zuvor getroffen worden ist; und
einen Computer-lesbaren Programmcode, der konfiguriert ist, die jeweilige Mehrfachwegverzögerungsposition der jeweiligen Mehrfachwegverzögerung einzustellen (520), um sicherzustellen, dass die jeweilige Mehrfachwegverzögerung und die eine der Mehrfachwegverzögerungen, für die zuvor eine Einstellungsentscheidung getroffen worden ist, durch zumindest eine Entfernung von N * die Minimalentfernung zwischen den Mehrfachwegverzögerungen getrennt ist.

18. Computerprogrammprodukt nach Anspruch 16, weiter mit:

einem Computer-lesbaren Programmcode, der konfiguriert ist, das gefilterte SIR und/oder den Leistungswert für die jeweilige Mehrfachwegverzögerung zu skalieren, um das gefilterte SIR und/oder den Leistungswert bei einer vorherigen Mehrfachwegverzögerungsposition nach einem Einstellen der jeweiligen Mehrfachwegverzögerungsposition zu verringern, falls das jeweilige, gefilterte SIR und/oder der Leistungswert für die jeweilige Mehrfachwegverzögerung nicht größer als die skalierten, gefilterten SIRs und/oder Leistungswerte ist, die mit den Verzögerungen verknüpft sind, die direkt benachbart zu der jeweiligen Mehrfachwegverzögerung sind.

**Revendications**

1. Procédé pour sélectionner des positions de retard pour un récepteur RAKE (en râteau) (320), comprenant :

la recherche (400) d'une pluralité de trajets multiples pour sélectionner un ensemble de retards de trajets multiples associés aux rapports signal à interférence, SIR, les plus élevés et/ou aux valeurs de puissance les plus élevées tout en maintenant une distance minimale entre les retards de trajets multiples durant un premier intervalle de temps ;
le fait de déterminer (410) des SIR et/ou des valeurs de puissance respectifs associés aux retards de trajets multiples respectifs durant un second intervalle de temps ; et
le filtrage (420) des SIR et/ou des valeurs de puissance respectifs sur la base des SIR et/ou des valeurs de puissance obtenus pendant la recherche de la pluralité de trajets multiples et la détermination des SIR et/ou des valeurs de puissance respectifs ;
le procédé étant **caractérisé en ce qu'**il comprend en outre :

pour chacun des retards de trajets multiples respectifs, la comparaison (430) du SIR et/ou de la valeur de puissance filtrés respectifs associés au retard de trajets multiples respectif aux SIR et/ou aux valeurs de puissance associés aux retards immédiatement adjacents au retard de trajet multiple respectif ;
pour chacun des retards de trajets multiples respectifs, le réglage (440) d'une position de retard de trajet multiple respectif sur la base d'une comparaison du SIR et/ou de la valeur de puissance filtrés respectifs associés au retard de trajet multiple respectif avec les SIR et/ou les valeurs de puissance filtrés associés aux retards immédiatement adjacents au retard de trajet multiple respectif ; et
l'affectation (450) des positions de retards de trajets multiples respectives à des doigts d'un récepteur RAKE.

2. Procédé selon la revendication 1, dans lequel le filtrage des SIR et/ou des valeurs de puissance respectifs comprend :

pour chacun des retards de trajets multiples respectifs :

la multiplication du SIR et/ou de la valeur de puissance obtenus pendant le premier intervalle de temps par un facteur d'échelle X pour obtenir un premier produit ;
la multiplication du SIR et/ou de la valeur de puissance obtenus pendant le second intervalle de temps par (1-X) pour obtenir un second produit : et
l'addition des premier et second produits pour obtenir un SIR et/ou une valeur de puissance filtrés.

3. Procédé selon la revendication 1, dans lequel la comparaison du SIR et/ou de la valeur de puissance filtrés respectifs associés au retard de trajet multiple respectif avec les SIR et/ou les valeurs de puissance filtrés associés à des retards immédiatement adjacents au retard de trajets multiples respectif comprend :

la multiplication des SIR et/ou des valeurs de puissance filtrés associés à des retards immédiatement adjacents au retard de trajet multiple respectif par un facteur d'échelle qui est compris entre 0 et 1 ; et
le fait de déterminer si le SIR et/ou la valeur de puissance filtrés respectifs est supérieur aux SIR et/ou aux valeurs de puissance filtrés mis à l'échelle associés aux retards immédiatement adjacents au retard de trajet multiple respectif.

4. Procédé selon la revendication 3, dans lequel le réglage de la position de retard de trajet multiple respective comprend :

le réglage de la position de retard de trajet multiple respectif si le SIR et/ou la valeur de puissance filtrés respectifs pour le retard de trajet multiple respectif n'est pas supérieur à au moins l'un des SIR et/ou des valeurs de puissance filtrés mis à l'échelle associés aux retards immédiatement adjacents au retard de trajet multiple respectif.

5. Procédé selon la revendication 4, dans lequel le réglage de la position de retard de trajet multiple respective comprend :

le fait de déterminer (510) un nombre N de retards de trajets multiples entre le retard de trajet multiple respectif et l'un des retards de trajets multiples pour lesquels une décision de réglage a été précédemment prise ; et
le réglage (520) de la position de retard de trajet multiple respective du retard de trajet multiple respectif pour assurer que le retard de trajet multiple respectif et celui des retards de trajets multiples pour lequel une décision de réglage a été précédemment prise, sont séparés par au moins une distance de N fois la distance minimale entre les retards de trajets multiples.

6. Procédé selon la revendication 4, comprenant en outre :

la mise à l'échelle du SIR et/ou de la valeur de puissance filtrés pour le retard de trajet multiple respectif afin de réduire le SIR et/ou la valeur de puissance filtrés en une position précédente de retard de trajet multiple après un réglage de la position de retard de trajet multiple respective si le SIR et/ou la valeur de puissance filtrés respectifs pour le retard de trajet multiple respectif n'est pas supérieur aux SIR et/ou aux valeurs de puissance filtrés mis à l'échelle associés aux retards immédiatement adjacents au retard de trajet multiple respectif.

7. Système pour sélectionner des positions de retards pour un récepteur RAKE (320), comportant :

un moyen destiné à rechercher une pluralité de trajets multiples pour sélectionner un ensemble de retards de trajets multiples associés aux rapports signal à interférence, SIR, les plus élevés et/ou aux valeurs de puissance les plus élevées tout en maintenant une distance minimale entre les retards de trajets multiples pendant un premier intervalle de temps ;
un moyen pour déterminer des SIR et/ou des valeurs de puissance respectifs associés aux retards de trajets multiples respectifs durant un second intervalle de temps ; et
un moyen pour filtrer les SIR et/ou les valeurs de puissance respectifs sur la base des SIR et/ou des valeurs de puissance obtenus pendant la recherche de la pluralité de trajets multiples et la détermination des SIR et/ou des valeurs de puissance respectifs ;
le système étant **caractérisé en ce qu'**il comporte en outre :

pour chacun des retards de trajets multiples respectifs, un moyen destiné à comparer le SIR et/ou la valeur de puissance filtrés respectifs associés au retard de trajet multiple respectif aux SIR et/ou aux valeurs de puissance associés à des retards immédiatement adjacents au retard de trajet multiple respectif ;
pour chacun des retards de trajets multiples respectifs, un moyen destiné à régler une position de retard de trajet multiple respective sur la base d'une comparaison du SIR et/ou de la valeur de puissance filtrés respectifs associés au retard de trajet multiple respectif avec les SIR et/ou les valeurs de puissance filtrés associés à des retards immédiatement adjacents au retard de trajet multiple respectif ; et
un moyen pour affecter les positions de retards de trajets multiples respectives à des doigts d'un récepteur RAKE.

8. Système selon la revendication 7, dans lequel le moyen destiné à filtrer les SIR et/ou les valeurs de puissance respectifs comporte :

pour chacun des retards de trajets multiples respectifs :

un moyen destiné à multiplier le SIR et/ou la valeur de puissance obtenus pendant le premier intervalle de temps par un facteur d'échelle X pour obtenir un premier produit ;
un moyen destiné à multiplier le SIR et/ou la valeur de puissance obtenus pendant le second intervalle de temps par (1-X) pour obtenir un second produit ;
un moyen destiné à additionner les premier et second produits pour obtenir un SIR et/ou une valeur de puissance filtrés.

9. Système selon la revendication 7, dans lequel le moyen destiné à comparer le SIR et/ou la valeur de puissance filtrés respectifs associés au retard de trajet multiple respectif avec les SIR et/ou les valeurs de puissance filtrés associés à des retards immédiatement adjacents au retard de trajet multiple respectif comporte :

un moyen destiné à multiplier les SIR et/ou les valeurs de puissance filtrés associés à des retards immédiatement adjacents au retard de trajet multiple respectif par un facteur d'échelle qui est compris entre 0 et 1 ; et
un moyen destiné à déterminer si le SIR et/ou la valeur de puissance filtrés respectifs est supérieur aux SIR et/ou aux valeurs de puissance filtrés mis à l'échelle associés aux retards immédiatement adjacents au retard de trajet multiple respectif.

10. Système selon la revendication 9, dans lequel le moyen destiné à régler la position de retard de trajet multiple respective comporte :

un moyen destiné à régler la position de retard de trajet multiple respective si le SIR et/ou la valeur de puissance filtrés respectifs pour le retard de trajet multiple respectif n'est pas supérieur à au moins l'un des SIR et/ou des valeurs de puissance filtrés mis à l'échelle associés aux retards immédiatement adjacents au retard de trajet multiple respectif.

11. Système selon la revendication 10, dans lequel le moyen destiné à régler la position de retard de trajet multiple respective comporte :

un moyen destiné à déterminer un nombre N de retards de trajets multiples entre le retard de trajet multiple respectif et l'un des retards de trajets multiples pour lequel une décision de réglage a été précédemment prise ; et un moyen destiné à régler la position de retard de trajet multiple respective du retard de trajet multiple respectif afin d'assurer que le retard de trajet multiple respectif et celui des retards de trajets multiples pour lequel une décision de réglage a été précédemment prise, sont séparés par au moins une distance de N fois la distance minimale entre les retards de trajets multiples.

**12.** Système selon la revendication 10, comportant en outre :

un moyen destiné à mettre à l'échelle le SIR et/ou la valeur de puissance filtrés pour le retard de trajet multiple respectif afin de réduire le SIR et/ou la valeur de puissance filtrés à une position de retard de trajet multiple précédente après un réglage de la position de retard de trajet multiple respective si le SIR et/ou la valeur de puissance filtré respectif pour le retard de trajet multiple respectif n'est pas supérieur aux SIR et/ou aux valeurs de puissance filtrés mis à l'échelle associés aux retards immédiatement adjacents au retard de trajet multiple respectif.

**13.** Produit à programme d'ordinateur pour sélectionner des positions de retard pour un récepteur RAKE (320), comportant :

un support de stockage lisible par ordinateur dans lequel est incorporé un code de programme lisible par ordinateur, le code de programme lisible par ordinateur comprenant :

un code de programme lisible par ordinateur configuré pour rechercher (400) une pluralité de trajets multiples pour sélectionner un ensemble de retards de trajets multiples associés aux rapports signal à interférence, SIR, les plus élevés et/ou aux valeurs de puissance les plus élevées tout en maintenant une distance minimale entre les retards de trajets multiples pendant un premier intervalle de temps ;
un code de programme lisible par ordinateur configuré pour déterminer (410) des SIR et/ou des valeurs de puissance respectifs associés aux retards de trajets multiples respectifs pendant un second intervalle de temps ; et
un code de programme lisible par ordinateur configuré pour filtrer (420) les SIR et/ou les valeurs de puissance respectifs sur la base des SIR et/ou des valeurs de puissance obtenus pendant la recherche de la pluralité de trajets multiples et la détermination des SIR et/ou des valeurs de puissance respectifs ;
le produit à programme d'ordinateur étant **caractérisé en ce qu'**il comprend en outre :

pour chacun des retards de trajets multiples respectifs, un code de programme lisible par ordinateur configuré pour comparer (430) le SIR et/ou la valeur de puissance filtrés respectifs associés au retard de trajet multiple respectif avec les SIR et/ou les valeurs de puissance associés à des retards immédiatement adjacents au retard de trajet multiple respectif ;
pour chacun des retards de trajets multiples respectifs, un code de programme lisible par ordinateur configuré pour régler (440) une position de retard de trajet multiple respective sur la base d'une comparaison du SIR et/ou de la valeur de puissance filtrés respectifs associés au retard de trajet multiple respectif avec les SIR et/ou les valeurs de puissance filtrés associés à des retards immédiatement adjacents au retard de trajet multiple respectif ; et
un code de programme lisible par ordinateur configuré pour affecter (450) les positions de retards de trajets multiples respectives à des doigts d'un récepteur RAKE.

**14.** Produit à programme d'ordinateur selon la revendication 13, dans lequel le code de programme lisible par ordinateur configuré pour filtrer les SIR et/ou les valeurs de puissance respectifs comprend :

pour chacun des retards de trajets multiples respectifs :

un code de programme lisible par ordinateur configuré pour multiplier le SIR et/ou la valeur de puissance obtenus pendant le premier intervalle de temps par un facteur d'échelle X afin d'obtenir un premier produit ;
un code de programme lisible par ordinateur configuré pour multiplier le SIR et/ou la valeur de puissance obtenus pendant le second intervalle de temps par (1-X) pour obtenir un second produit ; et
un code de programme lisible par ordinateur configuré pour additionner les premier et second produits afin d'obtenir un SIR et/ou une valeur de puissance filtrés.

**15.** Produit à programme d'ordinateur selon la revendication 13, dans lequel le code de programme lisible par ordinateur configuré pour comparer le SIR et/ou la valeur de puissance filtrés respectifs associés au retard de trajet multiple respectif avec les SIR et/ou les valeurs de puissance filtrés associés à des retards immédiatement adjacents au retard de trajet multiple respectif comprend :

un code de programme lisible par ordinateur configuré pour multiplier les SIR et/ou les valeurs de puissance filtrés associés à des retards immédiatement adjacents au retard de trajet multiple respectif par un facteur d'échelle qui est compris entre 0 et 1 ; et

un code de programme lisible par ordinateur configuré pour déterminer si le SIR et/ou la valeur de puissance filtrés respectifs est supérieur aux SIR et/ou aux valeurs de puissance filtrés mis à l'échelle associés à des retards immédiatement adjacents au retard de trajet multiple respectif.

**16.** Produit à programme d'ordinateur selon la revendication 15, dans lequel le code de programme lisible par ordinateur configuré pour régler la position de retard de trajet multiple respective comprend :

un code de programme lisible par ordinateur configuré pour régler la position de retard de trajet multiple respective si le SIR et/ou la valeur de puissance filtrés respectifs pour le retard de trajet multiple respectif n'est pas supérieur à au moins l'un des SIR et/ou des valeurs de puissance filtrés mis à l'échelle associés aux retards immédiatement adjacents au retard de trajet multiple respectif.

**17.** Produit à programme d'ordinateur selon la revendication 16, dans lequel le code de programme lisible par ordinateur configuré pour régler la position de retard de trajet multiple respective comprend :

un code de programme lisible par ordinateur configuré pour déterminer (510) un nombre N de retards de trajets multiples entre le retard de trajet multiple respectif et l'un des retards de trajets multiples pour lequel une décision de réglage a été précédemment prise ; et

un code de programme lisible par ordinateur configuré pour régler (520) la position de retard de trajet multiple respective du retard de trajet multiple respectif afin d'assurer que le retard de trajet multiple respectif et celui des retards de trajets multiples pour lequel une décision de retard a été précédemment prise, sont séparés par au moins une distance de N fois la distance minimale entre les retards de trajets multiples.

**18.** Produit à programme d'ordinateur selon la revendication 16, comprenant en outre :

un code de programme lisible par ordinateur configuré pour mettre à l'échelle le SIR et/ou la valeur de puissance filtrés pour le retard de trajet multiple respectif afin de réduire le SIR et/ou la valeur de puissance filtrés à une position de retard de trajet multiple précédente après un réglage de la position de retard de trajet multiple respective si le SIR et/ou la valeur de puissance filtré respectif pour le retard de trajet multiple respectif n'est pas supérieur aux SIR et/ou aux valeurs de puissance filtrés mis à l'échelle associés aux retards immédiatement adjacents au retard de trajet multiple respectif.

FIG. 1

EP 1 540 842 B1

RF Section
210

Baseband
Processor
212

I/Q Baseband
Signal

*FIG. 2*

300

I/Q Baseband
Signal

FIG. 3

Begin

Search multi-paths to select a set of multi-path delays associated with the highest SIRs and/or power values during a first time interval while maintaining a minimum distance between multi-path delays ⟋ — 400

Determine respective SIRs and/or power values associated with the respective multi-path delays during a second time interval ⟋ — 410

Filter the respective SIRs and/or power values ⟋ — 420

Compare filtered SIRs and/or power values with SIRs and/or power values associated with adjacent multi-path delays ⟋ — 430

Adjust respective multi-path delay positions for each of the RAKE receiver fingers based on comparison of the filtered SIRs and/or power values ⟋ — 440

Assign the respective multi-path delay positions to the RAKE receiver fingers ⟋ — 450

End

*FIG. 4*

Begin

Determine number N of multi-path delays
between a respective multi-path delay and
other multi-path delays for which an
adjusting decision has been made
previously — 510

Adjust multi-path delay positions to ensure
that the positions are separated by at least
N * the minimum distance between the
multi-path delay positions — 520

End

*FIG. 5*

**REFERENCES CITED IN THE DESCRIPTION**

**Patent documents cited in the description**

- US 6370397 B

**Non-patent literature cited in the description**

- The Mobile Communications Handbook. CRC Press, 1996